# FASCICULE DE BREVET EUROPEEN

(11) **EP 3 166 877 B1**
(45) Date de publication et mention de la délivrance du brevet: **27.02.2019**
(21) Numéro de dépôt: 15748276.1
(22) Date de dépôt: 23.06.2015
(51) Int. Cl.: B65G 47/256, B29C 49/42

(54) **DISPOSITIF D'ALIMENTATION DE PRÉFORMES COMPORTANT UNE GLISSIÈRE DE DÉFILEMENT ÉQUIPÉE DE BUTÉES LATÉRALES POUR ARRÊTER DES PRÉFORMES COUCHÉES**
VORRICHTUNG ZUR ZUFÜHRUNG VON VORFORMEN MIT EINEM TRANSPORTSCHIEBER MIT SEITENSTÜTZEN ZUM ANHALTEN NICHT AUFRECHTER VORFORMEN
DEVICE FOR FEEDING PREFORMS COMPRISING A TRANSPORT SLIDE PROVIDED WITH SIDE ABUTMENTS FOR HALTING NON-UPRIGHT PREFORMS

(30) Priorité: 11.07.2014 FR 1456723
(43) Date de publication de la demande: 17.05.2017
(73) Titulaire: Sidel Participations, 76930 Octeville-sur-Mer (FR)
(72) Inventeur: MAZO, Eric, F-76930 Octeville-sur-Mer (FR); SAVARY, Cyril, F-76930 Octeville-sur-Mer (FR)
(74) Mandataire: Grassin d'Alphonse, Emmanuel Jean Marie
(86) Numéro de dépôt international: PCT/FR2015/051687
(87) Numéro de publication internationale: WO 2016/005673

(56) Documents cités:
- JP-A- 2014 076 618
- US-A1- 2007 108 018
- US-A1- 2011 031 089

## Description

### DOMAINE TECHNIQUE DE L'INVENTION

L'invention concerne un dispositif d'alimentation de préformes, notamment pour l'alimentation d'une installation de formage de récipients par soufflage desdites préformes.

### ARRIERE PLAN TECHNIQUE DE L'INVENTION

L'invention concerne plus particulièrement un dispositif d'alimentation de préformes, notamment de préformes en matériau thermoplastique destinées à être conformé en bouteilles, adapté pour des préformes comportant un corps et un col comportant une collerette à sa jonction avec le corps, le dispositif comportant :
- une glissière de défilement des préformes qui comporte une fente longitudinale qui est délimitée transversalement par deux rails parallèles comportant chacun un chemin de glissement destiné à supporter la préforme debout par sa collerette, le corps étant normalement pendant sous les rails par son poids, maintenant ainsi le col de la préforme au-dessus des rails dans un couloir central de défilement des cols ;
- au moins une butée pour arrêter le défilement de préformes couchées dans la glissière par butée avec la collerette d'une telle préforme.

Le dispositif d'alimentation est destiné à être mis en oeuvre dans une installation de soufflage de récipients en polyéthylène téréphtalate (PET).

Selon une technique bien connue, de tels récipients sont produits en deux étapes principales. Dans une première étape, on procède au moulage par injection d'une préforme en PET. Cette préforme comporte un corps sensiblement tubulaire qui est fermé à l'une de ses extrémités axiales. Son autre extrémité présente, dès cette opération de moulage par injection, la forme définitive du col du récipient. Généralement, le col du récipient comporte un filetage et, à sa base, une collerette de support annulaire qui s'étend radialement en saillie vers l'extérieur par rapport au col et par rapport au col.

Il existe des machines dans lesquelles les préformes, une fois injectées, sont directement transmises vers la machine de soufflage, chaque préforme étant transportée individuellement.

Toutefois, dans de nombreux cas, les préformes sont fabriquées par injection en un premier endroit et sont moulées par soufflage à la forme définitive du récipient en un second endroit sur une machine de soufflage spécifique. Une telle technologie permet de procéder à l'opération de moulage par soufflage le plus près possible du lieu d'embouteillage, l'opération d'injection pouvant être effectuée en n'importe quel endroit. En effet, il est relativement aisé et peu coûteux de transporter des préformes, tandis que transporter des récipients après soufflage présente l'inconvénient d'être économiquement peu rentable du fait du volume très important des récipients.

Dans le cas où la machine d'injection et la machine de soufflage sont deux machines totalement indépendantes, la machine de soufflage dispose d'un dispositif d'alimentation en préformes qui est équipé d'un système de démêlage et d'alignement des préformes.

Dans un tel système, les préformes sont déversées en vrac dans un bac. Elles sont prélevées de ce bac par un tapis élévateur qui, à son tour, vient déverser les préformes, selon un rythme préétabli, à l'extrémité supérieure de rouleaux orienteurs, aussi appelés rouleaux d'alignement. Ces deux rouleaux d'alignement sont inclinés par rapport à l'horizontale et ils sont sensiblement parallèles l'un à l'autre. Les deux rouleaux sont entraînés en rotation selon des sens opposés, et sont écartés l'un de l'autre de manière à laisser subsister un intervalle qui est de dimension légèrement supérieure à la dimension des corps des préformes. Au contraire, l'écartement des deux rouleaux d'alignement est tel que l'espace transversal entre les deux rouleaux est inférieur à la dimension de la collerette de support située à la base du col.

Les rouleaux orienteurs sont configurés de telle manière que, sous l'effet de la gravité, les préformes sont forcées entre les deux rouleaux. Ainsi, par simple gravité, chaque préforme tend à se disposer entre les deux rouleaux, de manière à être retenue en appui par sa collerette sur les rouleaux tout en ayant le corps pendant vers le bas entre les deux rouleaux. Le mouvement de rotation contraire des deux rouleaux et leur inclinaison assure d'une part le placement des préformes les unes derrière les autres, dans la position normale décrite en début de paragraphe, et d'autre part, le glissement des préformes le long de l'axe des rouleaux, vers le bas des rouleaux orienteurs où elles sont ensuite récupérées dans une glissière de défilement elle-même reliée à l'installation de soufflage.

La glissière de défilement des préformes comporte une fente longitudinale qui est délimitée transversalement par deux rails parallèles.

Dans la glissière de défilement, les préformes s'accumulent en une file continue. Normalement, chaque préforme tend à se disposer debout dans la glissière, entre les deux rails parallèles, de manière à être retenue en appui par sa collerette sur les rails tout en ayant le corps pendant vers le bas entre les deux rails.

Toutefois, du fait que les préformes sont déversées en vrac dans les rouleaux orienteurs, et du fait du caractère aléatoire du placement des préformes, certaines d'entre elles arrivent dans la glissière d'alimentation sans avoir pu se positionner correctement. Certaines préformes arrivent notamment couchées dans la glissière. Bien entendu, de telles préformes ne peuvent pas être introduites dans l'installation de soufflage. Il en est de même des préformes emboîtées l'une dans l'autre, même dans le cas où la préforme inférieure est correctement orientée.

Jusqu'à présente, pour résoudre ce problème, on a proposé de disposer une butée d'arrêt des préformes située verticalement au droit de la fente. Les préformes présentent généralement un diamètre de collerette supérieur à la hauteur du col. Ainsi cette butée est située au-dessus du col des préformes normalement positionnées, de manière à entrer en contact uniquement avec le col des préformes couchées. Le défilement des préformes couchées est ainsi arrêté. Une trappe intégrée dans la glissière permet d'éjecter ces préformes.

Cependant, cette solution ne permet pas de bloquer des préformes dont le col présente une hauteur axiale supérieure ou égale au diamètre de la collerette.

Le document JP2014076618 décrit un dispositif d'alimentation de préformes selon le préambule de la revendication 1, évacuant les préformes en position anormale.

### BREF RESUME DE L'INVENTION

L'invention propose un dispositif d'alimentation de préformes selon la revendication 1.

Selon d'autres caractéristiques de l'invention :
- le dispositif comporte au moins une paire de butées opposées qui sont agencées transversalement en vis-à-vis, chacune au droit d'un chemin de glissement du rail associé ;
- chaque butée est formée par un pion conique d'axe transversal dont l'extrémité étroite est orientée vers le couloir de défilement des cols ;
- le dispositif comporte plusieurs paires de butées qui sont échelonnées verticalement à différentes hauteur par rapport aux chemins de glissement ;
- les paires de butées sont réparties longitudinalement depuis la plus élevée vers la moins élevée selon le sens de déplacement des préformes ;
- chaque butée est formée par une face orientée vers la fente qui est inclinée vers le bas selon le sens de déplacement des préformes ;
- la position transversale des butée est ajustable ;
- le dispositif comporte une plaque de guidage qui est agencée au droit du couloir de défilement pour maintenir les cols des préformes défilant debout en position dans la glissière ;
- la glissière comporte une trappe d'éjection d'une préforme arrêtée par une butée ;
- la trappe est commandée automatiquement par un capteur qui détecte l'arrêt de la préforme.

### BREVE DESCRIPTION DES FIGURES

D'autres caractéristiques et avantages de l'invention apparaitront au cours de la lecture de la description détaillée qui va suivre pour la compréhension de laquelle on se reportera aux dessins annexés dans lesquels :
- la figure 1 est une vue de côté qui représente schématiquement un dispositif d'alimentation de préformes pour une installation de soufflage de récipients, le dispositif d'alimentation comportant une glissière de défilement réalisée selon les enseignements de l'invention ;
- la figure 2 est une vue en coupe longitudinale selon le plan de coupe 2-2 de la figure 3 qui représente un tronçon de la glissière de défilement qui est équipée de butée latérale selon les enseignements de l'invention ;
- la figure 3 est une vue coupe transversale selon le plan de coupe 3-3 de la figure 2 qui représente une préforme normalement positionnée défilant entre les butées ;
- la figure 4 est une vue similaire à celle de la figure 3 qui représente une préforme couchée arrêtée par les butées ;
- la figure 5 est une vue en coupe horizontale de dessus selon le plan de coupe 5-5 de la figure 3 qui représente une préforme arrêtée par les butées, une trappe d'éjection occupant sa position de défilement ;
- la figure 6 est une vue similaire à celle de la figure 5 dans laquelle la trappe a été déplacée dans sa position d'éjection de la préforme arrêtée.

### DESCRIPTION DETAILLEE DES FIGURES

Dans la suite de la description, des éléments présentant une structure identique ou une fonction analogue seront désignés par une même référence.

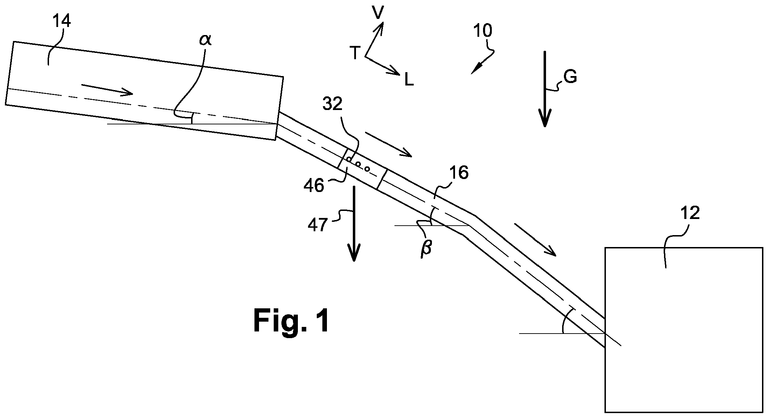

Dans la suite de la description, on adoptera à titre non limitatif des orientations longitudinale, verticale et transversale indiquées par le trièdre "L,V,T" des figures. La direction verticale est ici utilisée à titre de repère géométrique orienté perpendiculairement à l'axe longitudinal de la glissière de défilement. La direction de la gravité est indiquée par la flèche "G" de la figure 1. Comme cela est indiqué en début de description, la glissière étant incliné d'un angle déterminé par rapport à un plan horizontal, la direction verticale est ici inclinée du même angle par rapport à la direction de la gravité.

Dans la suite de la description, le terme "intérieur" sera utilisé pour qualifier une face ou un déplacement dirigé transversalement vers la fente 26 centrale de la glissière 16 de défilement, tandis que le terme "extérieur" qualifiera une direction opposée.

On a représenté à la figure 1 de manière très schématique un dispositif 10 d'alimentation de préformes destiné par exemple à alimenter en préformes une installation 12 de soufflage. Le dispositif 10 d'alimentation comporte des rouleaux 14 orienteurs supérieurs entre lesquels des préformes sont déversées en vrac selon un débit déterminé par des moyens non représentés.

Dans les rouleaux 14 orienteurs, les préformes sont orientées col en haut et sont alignées en une file de manière à être ensuite délivrées à une glissière 16 de défilement qui transporte les préformes jusqu'à l'installation 12 de soufflage. Un exemple de tels rouleaux 14 orienteurs est décrit en détails dans le document EP-A1-1.335.870. Des préformes 18 sont ainsi reçues dans la glissière 16 de défilement

Les rouleaux 14 orienteurs présentent une pente d'inclinaison "a" déterminée, par exemple de 12° par rapport à l'horizontale, pour permettre aux préformes de glisser jusqu'à l'entrée de la glissière 16 de défilement située en contrebas sous l'effet de la gravité, tandis que la glissière 16 de défilement présente une pente "β" d'inclinaison plus importante, par exemple de 15°.

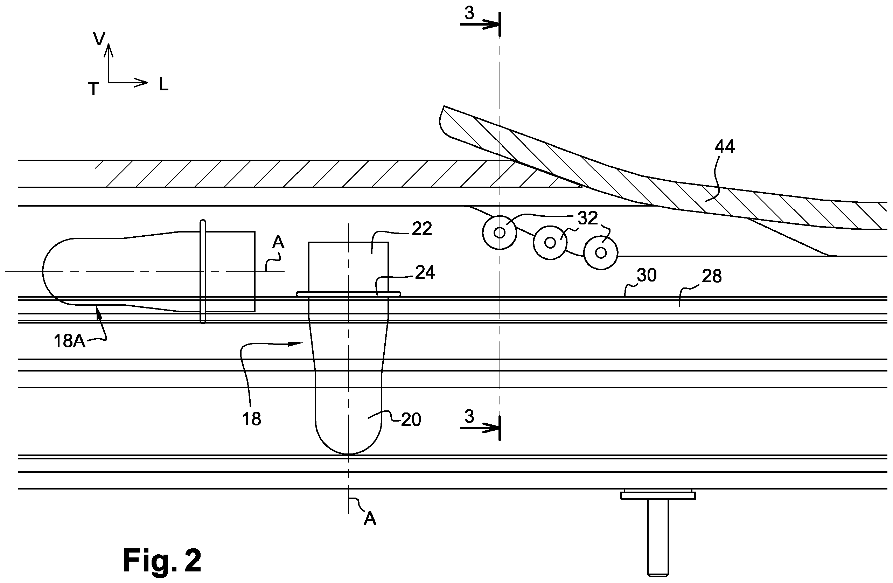

Comme cela est représenté à la figure 2, chaque préforme 18 alimentant l'installation 12 de soufflage présente un corps 20 tubulaire d'axe "A" qui est fermé à son extrémité inférieure. Le corps 20 est ouvert axialement vers le haut par l'intermédiaire d'un col 22 cylindrique qui prolonge le corps 20 vers le haut. Le col 22 présente, à sa jonction avec le corps 20, une collerette 24 qui s'étend radialement en saillie par rapport au tronçon cylindrique du col 22 et par rapport au corps 20. L'invention concerne aussi bien des préformes 18 qui présentent un col 22 dont la hauteur axiale supérieure ou égale au diamètre externe de la collerette 24, que des préformes 18 qui présentent un col 22 dont la hauteur axiale est inférieure au diamètre externe de la collerette 24.

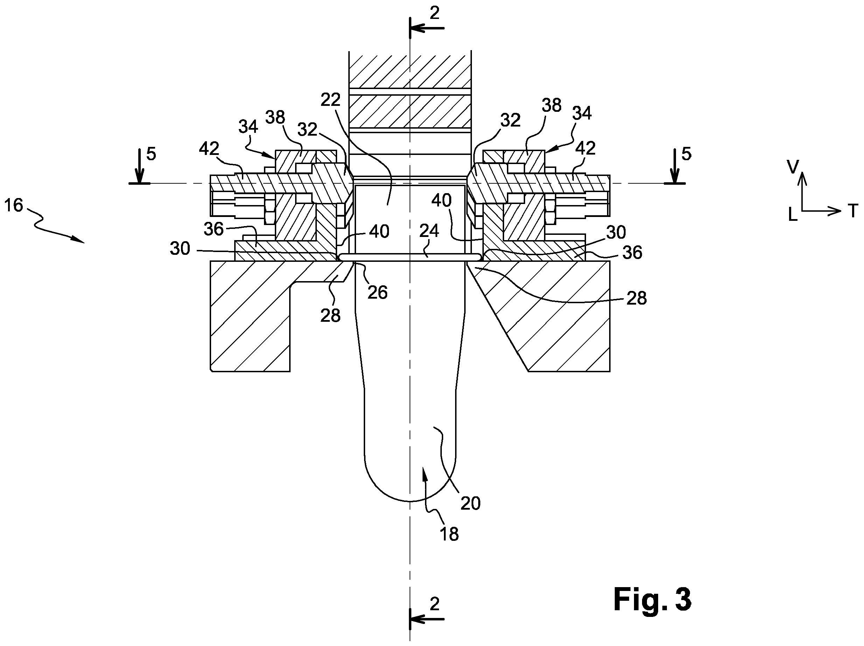

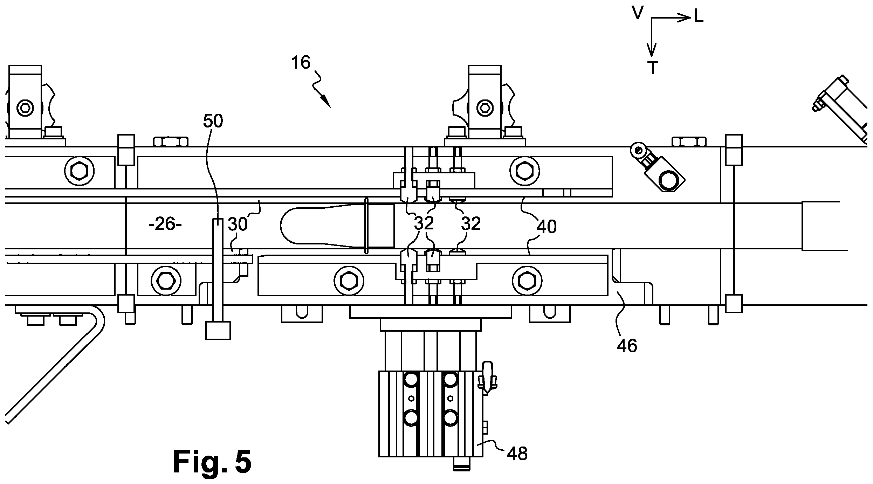

L'invention concerne plus particulièrement la glissière 16 de défilement des préformes 18. Comme cela est visible aux figures 3 et 5, la glissière 16 comporte une fente 26 longitudinale qui s'étend depuis une entrée jusqu'à une sortie de la glissière 16, la sortie étant située en contrebas de l'entrée pour permettre aux préformes 18 de glisser vers la sortie sous l'effet de la gravité.

La fente 26 est délimitée transversalement par deux rails 28 parallèles destinés à supporter de manière glissante la préforme 18 debout par sa collerette 24. A cet effet, les deux rails 28 sont écartés transversalement d'une distance qui est supérieure au diamètre externe du corps 20 des préformes 18, mais qui est inférieure au diamètre externe de la collerette 24.

La distance d'écartement des deux rails 28 est éventuellement ajustable par des moyens non représentés pour permettre à la glissière 16 de défilement de recevoir des séries de préformes 18 de différentes dimensions.

Lorsqu'une préforme 18 est reçue par la glissière 16 de défilement dans une position normale, la collerette 24 de chaque préforme 18 est supportée par deux chemins 30 de glissement formés chacun par une face supérieure bordant intérieurement chaque rail 28, tandis que le corps 20 de chaque préforme 18 est normalement pendant sous la glissière 16 par son poids. Dans cette position normale, la préforme 18 est dite "debout". Le col 24 de la préforme 18 est ainsi maintenu au-dessus des rails 28 dans un couloir central de défilement des cols 24 comme cela est représenté à la figure 3.

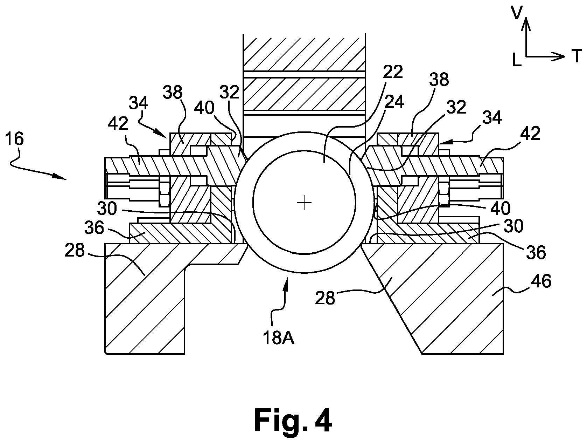

Cependant, il arrive que certaines préformes 18A soient reçues dans la glissière 16 en position couchée légèrement en travers des rails 28, comme cela est illustré aux figures 2 et 4, c'est-à-dire que leur axe "A" occupe une position sensiblement longitudinale au lieu d'occuper une position sensiblement verticale. Le corps 20 d'une préforme 18A couchée est alors agencé dans le couloir de défilement des cols 24, au-dessus des rails 28. Ces préformes 18A couchées ne peuvent pas être transférée à l'installation 12 de soufflage au risque de provoquer son blocage.

La glissière 16 de défilement comporte des moyens pour arrêter le défilement de ces préformes 18A couchées, et des moyens pour éjecter les préformes 18A couchées ainsi arrêtées.

Comme cela est illustré aux figures, et plus particulièrement à la figure 4, pour arrêter le défilement des préformes 18A couchées, la glissière 16 de défilement comporte au moins une butée 32 d'arrêt par contact avec la collerette 24 d'une telle préforme 18A. La butée 32 est agencée latéralement, verticalement au droit du chemin 30 de glissement du rail 28 associé, à l'extérieur du couloir de défilement des cols 22.

Dans l'exemple représenté aux figures, la glissière 16 de défilement comporte deux cornières 34 longitudinales. Chaque cornière 34 comporte une première aile 36 de fixation qui est agencée à plat sur la face supérieure d'un rail 28 associé, en longeant le chemin 30 de glissement du rail 28. Cette première aile 36 est fixée au rail 28 associé, par exemple au moyen de vis.

Chaque cornière 34 comporte aussi une aile 38 de guidage qui s'étend verticalement vers le haut depuis le bord intérieur de l'aile 36 de fixation qui est tourné vers la fente 26. Les faces intérieures des ailes 38 de guidage forment ainsi des parois 40 qui délimitent transversalement un corridor de largeur sensiblement égal au diamètre d'une collerette 24, avec un jeu transversal pour les collerettes 24 permettant le coulissement longitudinal des préformes 18.

Dans le mode de réalisation représenté aux figures, la glissière 16 de défilement comporte au moins une paire de butées 32 opposées qui sont agencées transversalement en vis-à-vis l'une de l'autre, chacune verticalement au droit du chemin 30 de glissement d'un rail 28 associé. Les butées 32 d'une paire sont écartées transversalement l'une de l'autre d'une distance suffisante pour permettre le passage du col 22 d'une préforme 18, comme représenté à la figure 3, mais d'une distance inférieure au diamètre de la collerette 24 de la préforme 18, comme représenté à la figure 4.

Chaque butée 32 est agencée verticalement au-dessus du chemin 30 de glissement à une hauteur permettant d'arrêter une préforme 18A couchée par contact avec sa collerette 24.

Comme illustré aux figures 3 et 4, chaque butée 32 est ici formée par un pion conique d'axe transversal dont l'extrémité étroite est orientée vers le couloir de défilement des cols 22. Cette forme conique permet notamment de recentrer transversalement dans la fente 26 des préformes 18 debout dont le col 22 aurait légèrement dévié du couloir de passage sans ralentir leur défilement.

La position transversale de chaque butée 32 est avantageusement ajustable de manière à pouvoir les adapter à plusieurs modèles de préformes. A cet effet, les butées forment la tête d'une vis 42 qui est montée dans un taraudage correspondant de l'aile 38 de guidage de la cornière 34, comme cela est illustré à la figure 3. La position transversale de chaque butée 32 est ainsi ajustée en vissant ou en dévissant la vis.

Chaque butée 32 d'arrêt est agencée en saillie transversale vers l'intérieur dans la paroi 40 intérieure du corridor de passage des préformes 18.

Dans l'exemple représenté à la figure 2, la glissière 16 de défilement comporte plusieurs paires de butées 32 qui sont échelonnées verticalement à différentes hauteur au-dessus du chemin 30 de glissement. Cela permet d'adapter facilement la glissière 16 de défilement à plusieurs diamètres de collerettes 24.

En outre, comme cela est particulièrement visible à la figure 2, les paires de butées 32 sont réparties longitudinalement depuis la plus haute, par rapport au chemin 30 de glissement, vers la moins haute selon le sens de déplacement des préformes 18. Ainsi, une préforme 18 debout mais légèrement inclinée sera guidée par contact de sa collerette 24 avec les butées 32 successives lors de son défilement jusqu'à ce que sa collerette 24 repose à plat contre les chemins 30 de glissement.

En variante non représentée de l'invention, chaque butée est formée par une face orientée vers la fente qui est inclinée vers le bas selon le sens de déplacement des préformes pour former une sorte de chemin de came pour plaquer les collerettes contre les chemins de glissement.

La glissière 16 de défilement comporte en outre une plaque 44 de guidage qui est agencée au droit du couloir de défilement pour maintenir les préformes 18 défilant en position debout dans la glissière 16 par contact le bord d'extrémité libre, aussi appelé buvant, du col 22. A cette fin, la plaque 44 de guidage est agencée au-dessus des rails 28, à une distance égale à la hauteur d'un col 22, avec un jeu vertical suffisant pour permettre le coulissement des préformes 18 dans la glissière 16. Cette plaque 44 de guidage est agencée en aval des butées 32, de manière que les préformes 18 debout mais légèrement inclinées aient pu être plaquées contre les chemins 30 de glissement par les butées 32 successives.

Comme expliqué précédemment, la glissière 16 de défilement comporte aussi des moyens pour éjecter les préformes 18A couchées arrêtées par les butées 32.

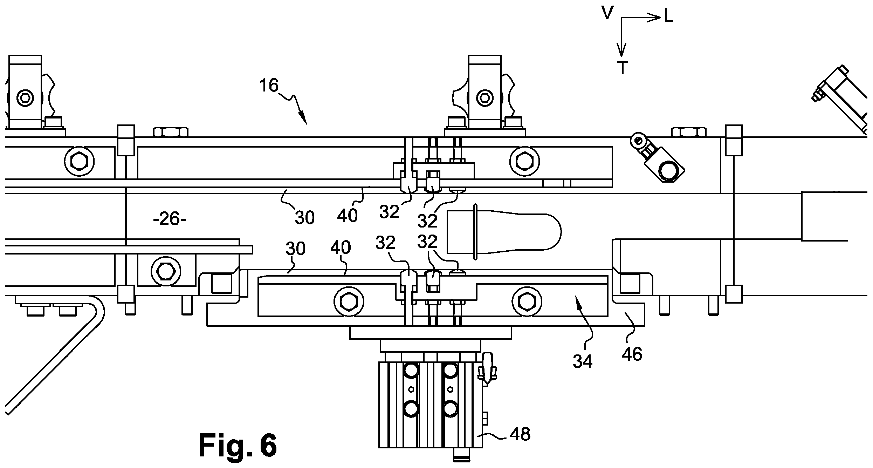

Comme représenté aux figures 5 et 6, l'un des rails 28 de la glissière 16 de défilement, le rail 28 droit en se reportant à la figure 4, comporte un tronçon indépendant formant une trappe 46 d'éjection d'une préforme 18A arrêtée par la butée 32.

La trappe 46 est agencée longitudinalement au même niveau que les butées 32. Dans le mode de réalisation représenté aux figures, les butées 32 située sur le rail 28 équipé de la trappe 46 sont fixées à celle-ci. A cet effet, la cornière 34 droite est fixée uniquement à la trappe 46.

Cette trappe 46 est montée mobile, ici en coulissement transversal, entre une position de défilement, comme représentée à la figure 5, dans laquelle la trappe 46 est alignée avec le reste du rail 28 pour former un rail continu permettant le défilement des préformes 18 depuis l'amont de la trappe 46 vers l'aval de la trappe 46, et une position d'éjection, comme représentée à la figure 6, dans laquelle la trappe 46 est écartée de sa position de défilement vers l'extérieur par rapport au reste du rail 28 pour élargir la fente 26 centrale afin de permettre aux préformes 18 de tomber sous la glissière 16 de défilement, comme indiqué par la flèche 47 de la figure 1.

Le déplacement de la trappe 46 entre ses deux positions est commandé automatiquement par un vérin 48. Le vérin 48 est lui-même piloté automatiquement par un capteur (non représenté) qui détecte l'arrêt d'une préforme 18 sur la glissière 16 de défilement. Il s'agit par exemple d'une cellule optique qui est agencée juste en aval des butées 32, ou encore de deux cellules optiques dont l'une est placée en aval du lieu de blocage tandis que l'autre est placée en amont du lieu de blocage.

Lorsque le capteur détecte une préforme 18A arrêtée par les butées 32, le vérin 48 commande la trappe 46 vers sa position d'éjection le temps nécessaire à l'éjection de la préforme 18 avant de revenir dans sa position de défilement.

Pour éviter que des préformes 18 normalement positionnées ne soient éjectées en même temps que la préforme 18A arrêtée, un doigt 50 d'arrêt rétractable est agencé en amont des butées 32. Avant l'ouverture de la trappe 46, le doigt 50 d'arrêt est commandé dans une position étendue en travers du couloir de défilement des cols pour arrêter temporairement le défilement des préformes 18 suivantes. Lorsque la trappe 46 est refermée dans sa position de défilement, le doigt 50 d'arrêt est rétracté de manière à libérer le passage des préformes 18.

Le dispositif d'alimentation réalisé selon les enseignements de l'invention est adapté pour arrêter les préformes couchées, quelle que soit les dimensions de son col et de sa collerette.

En outre, les butée en formes de pion conique permettent avantageusement de recentrer et de repositionner correctement des préformes qui seraient légèrement excentrées ou inclinées, permettant ainsi d'obtenir un défilement plus fluide des préformes.

## Revendications

1. Dispositif (10) d'alimentation de préformes (18), notamment de préformes en matériau thermoplastique destinées à être conformé en bouteilles, adapté pour des préformes comportant un corps (20) et un col (22) comportant une collerette (24) à sa jonction avec le corps (20), le dispositif (10) comportant :
- une glissière (16) de défilement des préformes (18) qui comporte une fente (26) longitudinale qui est délimitée transversalement par deux rails (28) parallèles comportant chacun un chemin (30) de glissement destiné à supporter la préforme (18) debout par sa collerette (24), le corps (20) étant normalement pendant sous les rails (28) par son poids, maintenant ainsi le col (22) de la préforme au-dessus des rails (28) dans un couloir central de défilement des cols (22) ;
- au moins une butée (32) pour arrêter le défilement de préformes (18A) couchées dans la glissière (16) par butée avec la collerette (24) d'une telle préforme (18A) ;
**caractérisé en ce que** la butée (32) est agencée latéralement, au droit du chemin (30) de glissement d'un rail (28), transversalement à côté du couloir de défilement des cols (22).

2. Dispositif (10) selon la revendication précédente, **caractérisé en ce qu'**il comporte au moins une paire de butées (32) opposées qui sont agencées transversalement en vis-à-vis, chacune au droit d'un chemin (30) de glissement du rail (28) associé.

3. Dispositif (10) selon l'une quelconque des revendications précédentes, **caractérisé en ce que** chaque butée (32) est formée par un pion conique d'axe transversal dont l'extrémité étroite est orientée vers le couloir de défilement des cols (22).

4. Dispositif (10) selon l'une quelconque des revendications 2 ou 3, **caractérisé en ce qu'**il comporte plusieurs paires de butées (32) qui sont échelonnées verticalement à différentes hauteur par rapport aux chemins (30) de glissement.

5. Dispositif (10) selon la revendication précédente, **caractérisé en ce que** les paires de butées (32) sont réparties longitudinalement depuis la plus élevée vers la moins élevée selon le sens de déplacement des préformes (18).

6. Dispositif (10) selon l'une quelconque des revendications 1 ou 2, **caractérisé en ce que** chaque butée (32) est formée par une face orientée vers la fente (26) qui est inclinée vers le bas selon le sens de déplacement des préformes (18).

7. Dispositif (10) selon l'une quelconque des revendications précédentes, **caractérisé en ce que** la position transversale des butée (32) est ajustable.

8. Dispositif (10) selon l'une quelconque des revendications précédentes, **caractérisé en ce qu'**il comporte une plaque (44) de guidage qui est agencée au droit du couloir de défilement pour maintenir les cols (22) des préformes défilant debout en position dans la glissière (16).

9. Dispositif (10) selon l'une quelconque des revendications précédentes, **caractérisé en ce que** la glissière (16) comporte une trappe (46) d'éjection d'une préforme (18A) arrêtée par une butée (32).

10. Dispositif (10) selon la revendication précédente, **caractérisé en ce que** la trappe (46) est commandée automatiquement par un capteur qui détecte l'arrêt de la préforme (18A).

## Patentansprüche

1. Vorrichtung (10) zur Zufuhr von Vorformlingen (18), insbesondere von Vorformlingen aus thermoplastischem Material, die dazu bestimmt sind, als Flaschen ausgebildet zu werden, geeignet für Vorformlinge, die einen Körper (20) und einen Hals (22) aufweisen, der einen Kragen (24) an seiner Verbindung mit dem Körper (20) aufweist, wobei die Vorrichtung (10) aufweist:
- eine Durchlauf-Gleitschiene (16) der Vorformlinge (18), die einen Längsschlitz (26) aufweist, der quer von zwei parallelen Schienen (28) begrenzt wird, die je einen Gleitpfad (30) aufweisen, der dazu bestimmt ist, den aufrechten Vorformling (18) über seinen Kragen (24) zu tragen, wobei der Körper (20) normalerweise durch sein Gewicht unter den Schienen (28) hängt, wodurch der Hals (22) des Vorformlings so oberhalb der Schienen (28) in einer zentralen Durchlaufrinne der Hälse (22) gehalten wird;
- mindestens einen Anschlag (32), um den Durchlauf der in der Gleitschiene (16) liegenden Vorformlinge (18A) durch Anschlag mit dem Kragen (24) eines solchen Vorformlings (18A) anzuhalten;
**dadurch gekennzeichnet, dass** der Anschlag (32) seitlich lotrecht zum Gleitpfad (30) einer Schiene (28) quer neben der Durchlaufrinne der Hälse (22) angeordnet ist.

2. Vorrichtung (10) nach dem vorhergehenden Anspruch, **dadurch gekennzeichnet, dass** sie mindestens ein Paar von entgegengesetzten Anschlägen (32) aufweist, die quer einander gegenüber angeordnet sind, jeder lotrecht zu einem Gleitpfad (30) der zugeordneten Schiene (28).

3. Vorrichtung (10) nach einem der vorhergehenden Ansprüche, **dadurch gekennzeichnet, dass** jeder Anschlag (32) von einem kegelförmigen Zapfen mit Querachse geformt wird, dessen schmales Ende zum Durchlaufgang der Hälse (22) ausgerichtet ist.

4. Vorrichtung (10) nach einem der Ansprüche 2 oder 3, **dadurch gekennzeichnet, dass** sie mehrere Paare von Anschlägen (32) aufweist, die senkrecht auf verschiedenen Höhen bezüglich der Gleitpfade (30) abgestuft sind.

5. Vorrichtung (10) nach dem vorhergehenden Anspruch, **dadurch gekennzeichnet, dass** die Paare von Anschlägen (32) längs ausgehend vom höchsten zum am wenigsten hohen gemäß der Verschieberichtung der Vorformlinge (18) verteilt sind.

6. Vorrichtung (10) nach einem der Ansprüche 1 oder 2, **dadurch gekennzeichnet, dass** jeder Anschlag (32) von einer zum Schlitz (26) ausgerichteten Seite geformt wird, die nach unten gemäß der Verschieberichtung der Vorformlinge (18) geneigt ist.

7. Vorrichtung (10) nach einem der vorhergehenden Ansprüche, **dadurch gekennzeichnet, dass** die Querstellung des Anschlags (32) einstellbar ist.

8. Vorrichtung (10) nach einem der vorhergehenden Ansprüche, **dadurch gekennzeichnet, dass** sie eine Führungsplatte (44) aufweist, die lotrecht zum Durchlaufgang angeordnet ist, um die Hälse (22) der aufrecht durchlaufenden Vorformlinge in der Gleitschiene (16) in Stellung zu halten.

9. Vorrichtung (10) nach einem der vorhergehenden Ansprüche, **dadurch gekennzeichnet, dass** die Gleitschiene (16) eine Klappe (46) zum Ausstoß eines Vorformlings (18A) aufweist, der von einem Anschlag (32) angehalten wird.

10. Vorrichtung (10) nach dem vorhergehenden Anspruch, **dadurch gekennzeichnet, dass** die Klappe (46) automatisch von einem Sensor gesteuert wird, der das Anhalten des Vorformlings (18A) erfasst.

## Claims

1. Device (10) for feeding preforms (18), in particular preforms made of thermoplastic material, which are designed to be formed into bottles, which device is designed for preforms comprising a body (20) and a neck (22) comprising a collar (24) at its junction with the body (20), the device (10) comprising:
- a slide (16) for passage of the preforms (18) which comprises a longitudinal slot (26) delimited transversely by two parallel rails (28) each comprising a sliding path (30) which is designed to support the preform (18) upright by means of its collar (24), the body (20) normally being suspended below the rails (28) by its weight, thus keeping the neck (22) of the preform above the rails (28) in a central channel for passage of the necks (22);
- at least one stop (32) to stop the passage of preforms (18A) which are lying in the slide (16) by abutment with the collar (24) of such a preform (18A),
**characterized in that** the stop (32) is arranged laterally, in line with the sliding path (30) of a rail (28), transversely next to the channel for passage of the necks (22).

2. Device (10) according to the preceding claim, **characterized in that** it comprises at least one pair of opposite stops (32) which are arranged transversely facing one another, each in line with a sliding path (30) of the associated rail (28).

3. Device (10) according to any one of the preceding claims, **characterized in that** each stop (32) is formed by a conical stud with a transverse axis, the narrow end of which is oriented towards the channel for passage of the necks (22).

4. Device (10) according to either of Claims 2 and 3, **characterized in that** it comprises a plurality of pairs of stops (32) which are staggered vertically at different heights relative to the sliding paths (30) .

5. Device (10) according to the preceding claim, **characterized in that** the pairs of stops (32) are distributed longitudinally from the highest to the lowest in the direction of travel of the preforms (18) .

6. Device (10) according to either of Claims 1 and 2, **characterized in that** each stop (32) is formed by a face oriented towards the slot (26), which face is inclined downwards in the direction of travel of the preforms (18).

7. Device (10) according to any one of the preceding claims, **characterized in that** the transverse position of the stops (32) is adjustable.

8. Device (10) according to any one of the preceding claims, **characterized in that** it comprises a guide plate (44) which is arranged in line with the passage channel, in order to keep the necks (22) of the preforms passing in an upright position in the slide (16).

9. Device (10) according to any one of the preceding claims, **characterized in that** the slide (16) comprises a trap (46) for ejection of a preform (18A) stopped by a stop (32).

10. Device (10) according to the preceding claim, **characterized in that** the trap (46) is controlled automatically by a sensor which detects the stoppage of the preform (18A).
